## Europäisches Patentamt

## European Patent Office

(11) Veröffentlichungsnummer: **0 107 791**
**B1**

## Office européen des brevets

(12) # EUROPÄISCHE PATENTSCHRIFT

(45) Veröffentlichungstag der Patentschrift:
16.12.87

(21) Anmeldenummer: **83109570.8**

(22) Anmeldetag: **26.09.83**

(51) Int. Cl.⁴: **G 02 B 6/34**

(54) **Verfahren zur Herstellung von Lichtwellenleiter-Abzweigern und -Multi-/Demultiplexern nach dem Strahlteilerprinzip.**

(30) Priorität: **29.09.82 DE 3236149**

(43) Veröffentlichungstag der Anmeldung:
**09.05.84 Patentblatt 84/19**

(45) Bekanntmachung des Hinweises auf die Patenterteilung:
**16.12.87 Patentblatt 87/51**

(84) Benannte Vertragsstaaten:
**DE FR GB**

(56) Entgegenhaltungen:
**EP-A-0 012 188**
**EP-A-0 026 379**
**EP-A-0 037 057**
**GB-A-2 072 876**

(73) Patentinhaber: **Siemens Aktiengesellschaft Berlin und München, Wittelsbacherplatz 2, D-8000 München 2 (DE)**

(72) Erfinder: **Michel, Herbert, Bacherstrasse 49, D-8000 München 90 (DE)**
Erfinder: **Rauscher, Walter, Tannenwaldstrasse 6, D-8000 München 70 (DE)**
Erfinder: **Reichelt, Armin, Dipl.- Phys., Queristrasse 4, D-8025 Unterhaching (DE)**

EP 0 107 791 B1

## Beschreibung

Die vorliegende Erfindung betrifft ein Verfahren zur Herstellung von Lichtwellenleiter-Abzweigern und -Multi-/Demultiplexern nach dem Strahlteilerprinzip gemäß dem Oberbegriff des Patentanspruchs 1.

Ein Verfahren der genannten Art ist aus der EP-A1-026 379 bekannt. Bei diesem Verfahren sind die Lichtwellenleiter auf der einen Seitenfläche des einen Körpers in parallelen Nuten angeordnet und mittels Kleber darin fixiert.

Ähnliche Verfahren, bei denen jeweils eine Spiegel- oder Filterschicht vor einem Zusammensetzen von Körperteilen aufgebracht wird, gehen aus der GB-A-2 072 876 und der US-A-4 325 605 hervor. Dort werden Körper oder Körperteile mit nur einem und nicht mehreren Lichtwellenleitern oder durchtrennten Lichtwellenleitern verwendet und zusammengesetzt.

Bei einem Verfahren nach der US-A-4 325 605 werden für ein genaues und einfaches Zusammensetzen an den Körperteile ausgebildete Bezugsflächen verwendet.

Die Erfindung zielt ab auf eine gute und genaue Fixierung der Lichtwellenleiter auf dem einen Körper und des weiteren Körpers auf dem zusammengesetzten Körper mit Filter- oder Spiegelschicht.

Diese Aufgabe wird durch die im kennzeichnenden Teil des Patentanspruchs 1 angegebenen Merkmale gelöst.

Das erfindungsgemäße Verfahren hat den Vorteil, daß die Lichtwellenleiter auf dem einen Körper nicht nur durch einen Kleber sondern zusätzlich durch einen fixierten Deckkörper befestigt sind und daß bei dem Abtrag des Deckkörpers, der durch Schleifen vorgenommen wird, eine sehr genaue plane Auflagefläche für den weiteren Körper geschaffen werden kann.

Der Deckkörperabtrag wird bevorzugterweise gemäß Anspruch 2 an dem zusammengesetzten Körper mit Filter- oder Spiegelschicht vorgenommen.

Zweckmäßig ist es auch, gemäß Anspruch 3 einen Teil des Mantels der aus Kern-Mantel-Glasfasern bestehenden Lichtwellenleiter abzutragen, weil dadurch Reflexionsverluste verringert werden können.

Bei der Herstellung von Verzweigern und Multi- oder Demultiplexern mit Faserschwänzen ist es zweckmäßig, gemäß Anspruch 4 den Deckkörper nur in einem Mittelabschnitt abzutragen, so daß Endabschnitte des Deckkörpers auf dem zusammengesetzten Körper mit Filter- oder Spiegelschicht verbleiben. Dadurch wird die bei völligem Abtrag des Deckkörpers entstehende Gefahr des Brechens der Lichtwellenleiter stark reduziert oder beseitigt.

Zweckmäßig ist es auch, die Lichtwellenleiter gemäß Anspruch 5 in Nuten anzuordnen.

Bevorzugte Materialien für den einen Körper sind in den Ansprüchen 6 und 7 angegeben.

Das Aufbringen der wellenlängenselektiven Filterschicht oder der teildurchlässigen Spiegelschicht erfolgt üblicherweise durch Aufdampfen. Bei der Herstellung von Verzweigern und Multi- oder Demultiplexern mit Faserschwänzen treten Schwierigkeiten auf, weil die Faserschwänze im Rezipienten stören. Zur Vermeidung dieser Schwierigkeiten kann so vorgegangen werden, wie es im Anspruch 8 angegeben ist. Durch die doppelte oder mehrfache Durchtrennung kann ein faserschwanzfreies Trennteil mit einer zu bedampfenden polierten Trennfläche erhalten werden, die störungsfrei im Rezipienten bedampft werden kann. Zwar müssen bei diesem Verfahren zusätzliche Koppelverluste in Kauf genommen werden, jedoch sind diese gering.

Bei einem erfindungsgemäßen Verfahren ist es zweckmäßig, Bezugsflächen gemäß Anspruch 9 zu verwenden.

Bei der Herstellung der Verzweiger oder Multi-/Demultiplexer müssen nach dem üblichen Feinschleifen von Seitenflächen nur diejenigen Flächen auch noch poliert werden, auf die entweder eine Filter- oder Spiegelschicht aufgedampft wird, oder die zugleich eine Faserstirnfläche enthalten, auf die ein Steckerflansch justiert wird.

Die Erfindung wird beispielhaft anhand der Figuren in der folgenden Beschreibung näher erläutert. Es zeigen

die Figuren 1 bis 5 einzelne Verfahrensstufen eines erfindungsgemäßen Verfahrens zur Herstellung eines Lichtwellenleiterabzweiges oder -Multi-/Demultiplexers ohne Faserschwänze mit 45°-Schnitt,
und
die Figuren 6 bis 9 einzelne Verfahrensstufen eines Verfahrens zur Herstellung eines Lichtwellenleiter-Abzweigers oder -Multi-/Demultiplexers mit Faserschwänzen am Beispiel eines Multi-/ Demultiplexers mit 70°-Filter.

In beiden Figurengruppen bezeichnen gleiche Bezugsziffern einander entsprechende Elemente.

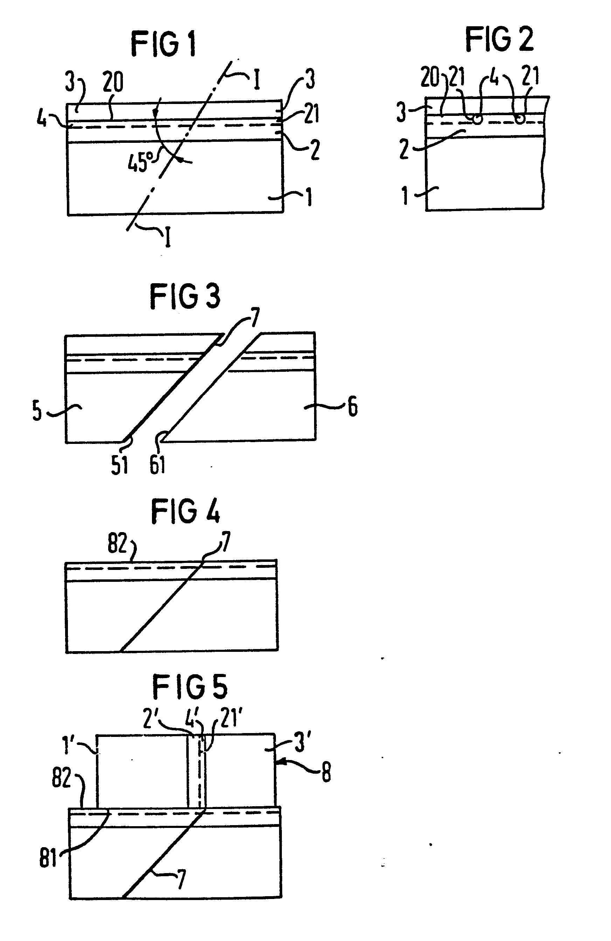

Die Figuren 1 und 2 zeigen in einer Seiten- bzw. bruchstückhaften Stirnansicht den bei der Herstellung des Abzweiges bzw. Multi-/Demultiplexers mit 45°-Spiegel bzw. -Filter verwendeten einen Körper. Dieser weist einen Grundkörper auf, der aus einem Stützkörper 1, beispielsweise aus Quarzglas, besteht, auf den ein Siliziumplättchen 2 aufgeklebt ist. In dem Siliziumplättchen 2 sind durch anisotropes Ätzen mehrere äquidistante, V-förmige Nuten 21 erzeugt worden, die gemäß den Figuren 1 bis 5 parallel verlaufen und in der von dem Stützkörper 1 abgewandten ebenen Seitenfläche 20 des Siliziumplättchens angeordnet sind. In diese Nuten 21 sind Lichtwellenleiter 4 in Form von Glasfasern, insbesondere Kern-Mantel-Glasfasern mit Hilfe eines Deckplättchens 3 aus Glas eingekittet.

Der Körper nach den Figuren 1 und 2 wird längs der in Figur 1 eingezeichneten, mit den Faserachsen einen Winkel von 45° einschließenden Schnittlinie I - I vertikal zur Zeichenebene durchtrennt und die Trennflächen 51 und 61 auf den dabei entstehenden und in der Figur 3 dargestellten Trennteilen geschliffen und optisch poliert. Bei der Herstellung von Multi-/Demultiplexern kann der Schnitt zweckmäßigerweise auch unter einem Winkel von beispielsweise 70° zu den Faserachsen geführt werden.

Auf eine der beiden Trennflächen 51 und 61, beispielsweise die Trennfläche 51, wird eine teildurchlässige Spiegelschicht oder auch Filterschicht aufgedampft, die bei Multi-/Demultiplexern wellenlängenselektiv sein muß. In der Figur 3 ist diese Schicht mit 7 bezeichnet.

Danach werden die beiden Trennteile 5 und 6 wieder zusammengefügt und miteinander verbunden, so daß ein dem Korper nach Figur 1 gleichender Körper mit Filter oder Spiegel entsteht, wie er in der Figur 4 dargestellt ist.

Von dem in Figur 4 dargestellten Körper mit Filter oder Spiegel wird das Deckplättchen 3 abgeschliffen. Zur Verringerung von Reflexionsverlusten kann gegebenenfalls auch ein Teil des Fasermantels der Fasern 4 abgeschliffen werden.

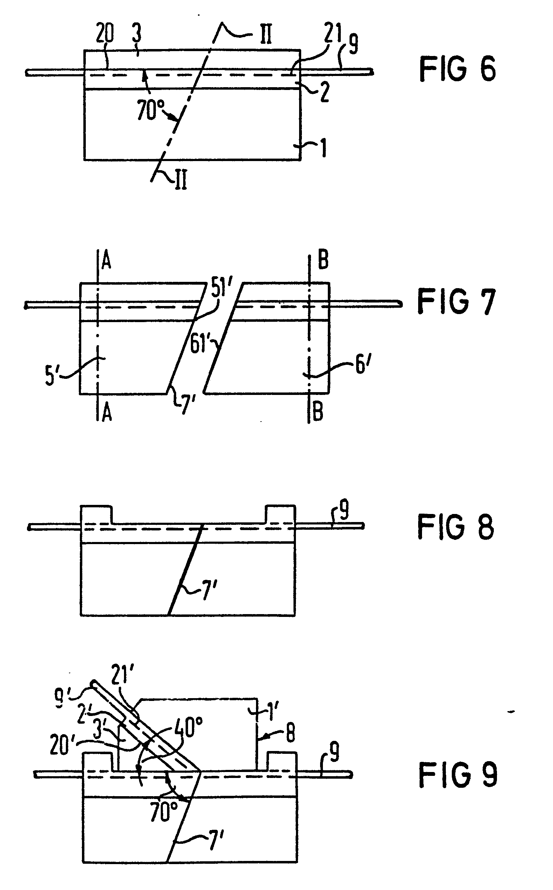

Dann wird auf die abgeschliffene Fläche des Körpers mit dem Filter oder Spiegel 7 ein weiterer Körper aufgesetzt, so wie es in der Figur 5 dargestellt ist. Der weitere Körper kann grundsätzlich so aufgebaut sein, wie der eine Körper nach den Figuren 1 und 2. D.h. er kann aus einem Grundkörper bestehen, beispielsweise aus einem Stützkörper 1', auf den ein Siliziumplättchen 2' geklebt ist, in dessen freie Oberfläche durch anisotropes Ätzen mehrere äquidistante V-förmige Nuten 21' erzeugt worden sind, in die Lichtwellenleiter 4' mit Hilfe eines Deckkörpers 3' eingekittet sind. Wichtig ist aber, daß die Lichtwellenleiter 4' in einer Seitenfläche 81 des weiteren Körpers 8 enden, d.h. diese Fläche 81 weist Faserstirnflächen auf. Diese Fläche 81 wird zusammen mit den Faserstirnflächen geschliffen und poliert.

Nach dem Polieren wird der weitere Körper 8 mit seiner Stirnfläche 81 auf die geschliffene Fläche 82 des Körpers mit dem Filter oder Spiegel 7 aufgesetzt und dann die beiden Körper so zueinander justiert, daß das am Filter oder Spiegel 7 aus einer Faser 4 ausgekoppelte Licht in die ihr zugeordnete Faser 4' des weiteren Körpers 8 eingekoppelt wird. In diesem Zustand werden die beiden Körper miteinander verkittet, so daß der in Figur 5 dargestellte Abzweig oder Multi-/Demultiplexer entstanden ist.

Nach abschließender Facettierung und Politur der externen Flächen kann der zusammengesetzte Körper nach Figur 5 parallel zu einer Ebene, die durch eine Faser 4 und die ihr zugeordnete Faser 4' aufgespannt wird, in einzelne Abzweige bzw. Multi-/Demultiplexer zersägt werden.

Anstelle des aus einem Glaskörper 1 und einem aufgeklebten Siliziumplättchen 2 bestehenden Grundkörpers können als Grundkörper auch Glaskörper oder andere plastisch verformbare Körper verwendet werden, in die V-förmige Nuten geritzt, gesägt, gepreßt oder geprägt sind.

Ähnlich sind die Verfahrensschritte bei der Herstellung von Lichtwellenleiter-Abzweigen und -Multi-/Demultiplexern mit Faserschwänzen. Die Herstellung wird am Beispiel eines Multi-/Demultiplexers anhand der Figuren 6 bis 9 erläutert.

Die Figur 6 zeigt in der gleichen Seitenansicht wie in Figur 7 den bei dieser Herstellung verwendeten einen Körper, der bis auf die beidseitig über den Körper hinausstehenden Faserschwänze mit dem Trägerkörper nach den Figuren 1 und 2 identisch ist. Die über einen Körper hinausstehenden Fasern sind in den Figuren 6 bis 9 im Unterschied zu den Fasern der Figuren 1 bis 5 mit 9 bzw. 9' bezeichnet.

Der Körper nach Figur 1 wird längs der mit den Faserachsen einen Winkel von 70° einachließenden Schnittlinie II - II vertikal zur Zeichenebene durchtrennt, so daß die in Figur 7 dargestellten beiden Trennteile 5', 6' mit den Trennflächen 51' bzw.- 61' entstehen. Auf eine der beiden geschliffenen und polierten Trennflächen, beispielsweise die Trennfläche 51', wird eine frequenzselektive Filterschicht 7' aufgedampft, und dann die beiden Trennteile 5' und 6' wieder so zusammengefügt und miteinander verbunden, daß ein den Trägerkörper nach Figur 6 gleichender Körper mit Filterschicht entsteht.

Da beim Aufdampfen die Faserschwänze im Rezipienten stören, kann der eine Körper vor dem Durchtrennen unter dem Winkel von 70° oder 45° zunächst längs der Schnittlinie A - A oder auch B - B durchtrennt werden. Nach dem Aufdampfen müssen dann alle drei oder vier Teile des Körpers wieder zueinander justiert werden. Wird der Körper sowohl längs der Schnittlinie A - A als auch der Schnittlinie B - B durchtrennt, so kann beim Aufbau der Abzweiger oder Multi-/Demultiplexer wie in dem Verfahren nach den Figuren 1 bis 5 vorgegangen werden, indem vorerst nur mit dem zwischen den Schnittlinien A - A und B - B liegenden Mittelabschnitt des Körpers gearbeitet wird. Erst wenn ein der Figur 5 entsprechender zusammengesetzter Körper hergestellt worden ist, werden die links der Schnittlinie A - A und rechts der Schnittlinie B - B in Figur 7 liegenden Endabschnitte des Körpers wieder so anjustiert, daß die Lichtwellenleiter wieder fluchten. Bei diesem Verfahren müssen jedoch geringe zusätzliche Koppelverluste in Kauf genommen werden.

Das Deckplättchen 3 des in beiden Fällen entstehenden Körpers mit Filter oder Spiegel und zumindest einer zusätzlichen Arbeitsfuge wird zum Aufsetzen des weiteren Körpers 8 abgeschliffen. Ein völliges Abschleifen des Deckplättchens 3 muß jedoch hier wegen der Gefahr des Brechens der überstehenden Fasern vermieden werden. Deshalb wird das Deckplättchen 3 nur in einem Mittelabschnitt des Körpers, in dem der weitere Körper aufzusetzen ist, abgetragen. In Endabschnitten des einen Körpers bleiben Reste des Deckplättchens stehen, so daß der in Figur 8 dargestellte Körper entsteht. In dem Mittelabschnitt kann auch gegebenenfalls wieder ein Teil des Mantels der Fasern mit abgetragen werden. Das bereichsweise Abtragen des Deckplättchens 3 und gegebenenfalls der Fasermäntel kann beispielsweise mit einer feinkörnigen Diamantscheibe bewerkstelligt werden.

Figur 9 zeigt das fertige Endprodukt nach dem Körper-Verbindungsschritt. Die Fasern 9' des weiteren Körpers 8 des Endproduktes zweigen entsprechend dem Reflexionsgesetz und dem 70°-Winkel zwischen den Fasern 9 und dem filter 7; in einem Winkel von 40° zu den Fasern 9 ab.

**Patentansprüche**

1. Verfahren zur Herstellung von Lichtwellenleiter-Verzweigern und -Multi-/Demultiplexern nach dem Strahlteilerprinzip, wobei ein Körper (1), bei dem auf einer Seitenfläche (20) parallele Lichtwellenleiter (4; 9) angeordnet und fixiert sind, schräg zur Längsrichtung der Lichtwellenleiter (4; 9) durchtrennt wird, so daß zwei Trennteile (5, 6; 5', 6') entstehen, von denen jedes parallele durchtrennte Lichtwellenleiter aufweist, die in den durch die Durchtrennung erzeugten Trennflächen (51, 61; 51', 61') auf beiden Trennteilen (5, 6; 5', 6'') enden,

wobei zumindest eine (51; 51') dieser Trennflächen (51, 61; 51', 61') mit einer Filter- oder Spiegelschicht (7; 7') beschichtet wird,

wobei danach die beiden Trennteile (5, 6; 5', 6') mit einander zugekehrten Trennflächen (51, 61; 51', 61') wieder so aneinander befestigt werden, daß die durch die Filter- oder Spiegelschicht (7; 7') voneinander parallelen durchtrennten Lichtwellenleiter wieder fluchten, und

wobei auf der die fluchtenden durchtrennten Lichtwellenleiter aufweisenden Seitenfläche (82) des entstandenen zusammengesetzten Körpers mit Filter- oder Spiegelschicht (7; 7') ein weiterer Körper (8), auf dem parallele Lichtwellenleiter (4'; 9') fixiert sind, die in einer Seitenfläche (81) dieses Körpers (8) enden, derart befestigt wird, daß diese beiden Seitenflächen (81, 82) einander gegenüberliegen und die fluchtenden durchtrennten Lichtwellenleiter und die Lichtwellenleiter (4'; 9') des weiteren Körpers (8) einander zugeordnet sind,

dadurch gekennzeichnet ,

daß die auf der einen Seitenfläche (20) des einen Körpers (1) angeordneten Lichtwellenleiter (4, 9) mittels eines über ihnen angeordneten Deckkörpers (3) fixiert sind, und daß vor dem Aufbringen des weiteren Körpers (8) auf den zusammengesetzten Körper mit Filter- oder Spiegelschicht (7, 7') ein Deckkörperabtrag vorgenommen wird.

2. Verfahren nach Anspruch 1, dadurch gekennzeichnet, daß der Deckkörperabtrag an dem zusammengesetzten Körper mit Filter- oder Spiegelschicht (7; 7') vorgenommen wird.

3. Verfahren nach Anspruch 1 oder 2, dadurch gekennzeichnet, daß auch ein Teil eines Mantels der aus Kern-Mantel-Glasfasern bestehenden Lichtwellenleiter (4; 9) oder durchtrennten Lichtwellenleiter abgetragen wird.

4. Verfahren nach Anspruch einem der vorhergehenden Ansprüche, dadurch gekennzeichnet , daß der Deckkörper (3) nur in einem Mittelabschnitt abgetragen wird, so daß Endabschnitte des Deckkörpers (3) auf dem zusammengesetzten Körper mit Filter- oder Spiegelschicht (7; 7') verbleiben (Figur 8).

5. Verfahren nach einem der vorhergehenden Ansprüche, dadurch gekennzeichnet, daß die eine Seitenfläche (20) des einen Körpers (1) parallele Nuten (21) aufweist, in denen die Lichtwellenleiter (4; 9) angeordnet sind.

6. Verfahren nach Anspruch 5, dadurch gekennzeichnet, daß der eine Körper (1) aus Glas oder einem plastisch verformbaren Material besteht, in das die Nuten (21) geritzt, gesägt, gepreßt oder geprägt sind.

7. Verfahren nach Anspruch 5, dadurch gekennzeichnet, daß die Nuten (21) in ein auf dem einen Körper (1) befestigtes Plättchen (2) aus anisotrop ätzbarem Material durch entsprechendes Ätzen eingeätzt sind und V-förmiges Profil aufweisen.

8. Verfahren nach einem der vorhergehenden Ansprüche, insbesondere nach Anspruch 4, dadurch gekennzeichnet, daß an dem einen Körper (1) mit den Lichtwellenleitern (4; 9) mindestens zwei Durchtrennungen vorgenommen werden, so daß mehr als zwei Trennteile entstehen, die mit einer dazwischenliegenden Filter- oder Spiegelschicht wieder so zusammengebracht werden, daß die durchtrennten Lichtwellenleiter wieder fluchten.

9. Verfahren nach einem der vorhergehenden Ansprüche, dadurch gekennzeichnet , daß der zusammengesetzte Körper mit Filter- oder Spiegelschicht (7; 7') und der weitere Körper (8) Bezugsflächen aufweisen, die an eine Anschlagfläche anlegbar sind und dabei parallel zu den von den paarweise einander zugeordneten fluchtenden durchtrennten Lichtwellenleitern des zusammengesetzten Körpers und Lichtwellenleiter (4'; 9') des weiteren Körpers (3) aufgespannten Ebenen sind.

**Claims**

1. A method of manufacturing light waveguide branchings and multi/demultiplexers in accordace with the beam-splitting principle, where a component (1) having parallel light waveguides (4, 9) arranged and fixed on one side face (20), is divided transversely to the longitudinal direction of the light waveguides (4; 9) so that two separated components (5, 6; 5', 6') are formed, each of which comprises parallel, divided light waveguides which terminate in the parting planes (51, 61; 51', 61') of the two separated components (5, 6; 5', 6'), produced as a result of the division;

where at least one (51; 51') of these parting planes (51, 61; 51', 61') is coated with a filtering or reflective coating (7; 7'),

where the two separated components (5, 6; 5' 6') are then re-attached to one another, with their parting planes (51, 61; 51', 61') facing such that the parallel light waveguides, separated from one another by the filtering or reflective coating (7; 7') become re-aligned and

where a further component (8) on which are fixed parallel light waveguides (4'; 9') which terminate at a side face (81) of this component (8), is attached to the side face (82), which comprises the aligned, divided light waveguides, of the assembled component provided with the filtering or reflective coating (7; 7'), that these two side faces (81, 82) are arranged opposite one another and the aligned, divided light waveguides and the light waveguides (4'; 9') of the additional component (8) ale assigned to one another; characterised in that the light waveguides (4, 9) arranged on the first side face (20) of the first component (1) are fixed by a covering component (3) positioned above them, and that the covering component is groundoff before the additional component (8) is applied to the assembled component provided with the filtering or reflective layer (7, 7').

2. A method as claimed in Claim 1, characterised in that the covering component is removed from the assembled component provided with the filtering or reflective coating (7; 7').

3. A method as claimed in Claims 1 or 2, characterised in that core-casing glass fibres, or divided light waveguides, and part of a casing of the light waveguides (4; 9) is additionally removed.

4. A method as claimed in one of the preceding Claims, characterised in that the covering component (3) is only removed from a central section, so that end sections of the covering component (3) remain on the assembled component provided with the filtering or reflective coating (7; 7') (Fig. 8).

5. A method as claimed in one of the preceding Claims, characterised in that the first side face (20) of the first component (1) contains parallel grooves (21) in which the light waveguides (4; 9) are arranged.

6. A method as claimed in Claim 5, characterised in that the first component (1) consists of glass or of a plastically-deformed raw material into which the grooves (21) are scratched, sawn, impressed, or stamped.

7. A method as claimed in Claim 5, characterised in that the grooves (21) are etched, by an appropriate etching method, into a disc (2) of anisotropically-etchable material attached to the first component (1), and that the grooves (21) have a V-shaped profile.

8. A method as claimed in one of the preceding Claims, in particular as claimed in Claim 4, characterised in that at least two divisions are made through the first component (1) provided with the light waveguides (4; 9), so that more than two parted components are formed, which are then re-assembled with an interlying filtering or reflective coating in such manner that the divided light waveguides become re-aligned.

9. A method as claimed in one of the preceding Claims, characterised in that the assembled components provided with the filtering or reflective coating (7; 7') and the additional component (8) have reference faces which can be applied to a stop surface and are thus made parallel to the planes defined by the aligned, divided light waveguides of the assembled component, assigned to one another in pairs, and the light waveguides (4'; 9') of the additional component (3).

**Revendications**

1. Procédé pour fabriquer des dispositifs de dérivation et des multiplexeurs-démultiplexeurs de guides d'ondes optiques conformément au principe des diviseurs de faisceaux, et selon lequel on subdivise un corps (1), sur une surface latérale (20) duquel se trouvent disposés et fixés des guides d'ondes optiques (4;9) parallèles, obliquement par rapport à la direction longitudinale des guides d'ondes optiques (4;9) de manière à obtenir deux parties séparées (5, 6; 5', 6'), dont chacune comporte des guides d'ondes optiques séparés et parallèles, qui se terminent au niveau des surfaces de séparation (51, 61; 51', 61'), produites lors de la subdivision et présentes sur les deux parties séparées (5, 6; 5', 6'), et selon lequel on recouvre au moins l'une (51; 51') de ces surfaces de séparation (51, 61; 51', 61') avec une couche (7; 7') formant filtre ou miroir, et selon lequel on fixe ensuite à nouveau l'une contre l'autre les deux parties séparées (5, 6; 5', 6'), au niveau de leurs surfaces de séparation (51, 61; 51', 61') se faisant face, de manière que les guides d'ondes optiques parallèles et séparés par la couche formant filtre ou miroir (7; 7') soient à nouveau alignés, et selon lequel on fixe sur les surfaces latérales (82), qui portent les guides d'ondes optiques séparés et alignés, du corps assemblé obtenu et contenant la couche (7; 7') formant filtre ou miroir, un corps supplémentaire (8), sur lequel sont fixés des guides d'ondes optiques (4'; 9') parallèles, qui se terminent au niveau d'une surface latérale (81) de ce corps (8), de telle sorte que ces deux surfaces latérales (81, 82) sont disposées mutuellement en vis-à-vis et les guides d'ondes optiques séparés et alignés et les guides d'ondes optiques (4'; 9') du corps supplémentaire (8) sont associés entre eux, caractérisé par le fait que les guides d'ondes optiques (4, 9), disposés sur une surface latérale (20) du premier corps (1), sont fixés à l'aide d'un corps de recouvrement (3) disposé au-dessus de ces guides d'ondes et qu'on réalise une élimination du corps de recouvrement avant la mise en place du corps supplémentaire (8) sur le corps assemblé et contenant la couche (7; 7') formant filtre ou miroir.

2. Procédé selon la revendication 1, caractérisé par le fait que l'on exécute l'enlèvement du corps de recouvrement sur le corps assemblé comportant la couche (7, 7') formant filtre ou miroir.

3. Procédé suivant la revendication 1 ou 2, caractérisé par le fait que l'on retient une partie de la gaine des guides d'ondes optiques (4;9), qui sont constitués par une fibre de verre comportant un coeur et une gaine ou bien de guides d'ondes optiques subdivisés.

4. Procédé suivant l'une des revendications précédentes, caractérisé par le fait qu'on élimine le corps de recouvrement (3) uniquement dans une section médiane de sorte que les sections terminales du corps de recouvrement (3) subsistent sur le corps assemblé et contenant la couche (7;7') formant filtre ou miroir (figure 8).

5. Procédé suivant l'une des revendications précédentes caractérisé par le fait qu'une face latérale (20) d'un corps (1) comporte des rainures parallèles (21), dans lesquelles sont disposés les guides d'ondes optiques (4; 9).

6. Procédé suivant la revendication 5, caractérisé par le fait qu'un corps (1) est constitué par du verre ou un matériau déformable plastiquement et dans lequel les rainures (21) sont formées par rainurage, sciage, matriçage ou gaufrage.

7. Procédé suivant la revendication 5, caractérisé par le fait que les rainures (21) sont ménagées au moyen d'une corrosion correspondante dans une plaquette (2) située sur le corps (1) est constituée en un matériau pouvant être corrodé d'une manière anisotrope, et possèdent un profil en V.

8. Procédé suivant l'une des revendications précédente, notamment la revendication 4, caractérisé par le fait qu'on réalise dans le corps (1) muni des guides d'ondes optiques (4; 9), au moins deux subdivisions de sorte que l'on obtient plus de deux parties séparées, que l'on réunit à nouveau moyennant l'interposition d'une couche formant filtre ou miroir de telle manière que les guides d'ondes optiques séparés sont à nouveau alignés.

9. Procédé suivant l'une des revendications précédentes, caractérisé par le fait que le corps assemblé, contenant la couche (7; 7') formant filtre ou miroir et le corps supplémentaire (8) possèdent des surfaces de référence qui peuvent être appliquées contre une surface de butée et sont parallèles aux plans définis par les guides d'ondes optiques séparés et alignés, associés par couples, du corps assemblé et des guides d'ondes optiques (4'; 9') du corps supplémentaire (3).

## FIG 1

## FIG 2

## FIG 3

## FIG 4

## FIG 5

FIG 6

FIG 7

FIG 8

FIG 9